Europäisches Patentamt

European Patent Office

Office européen des brevets

(19)

(11) Publication number: **0 355 020**
**A2**

# (12) EUROPEAN PATENT APPLICATION

(21) Application number: **89114884.3**

(51) Int. Cl.⁴: **G07G 1/12**

(22) Date of filing: **11.08.89**

(30) Priority: **17.08.88 JP 203994/88**

(43) Date of publication of application:
**21.02.90 Bulletin 90/08**

(84) Designated Contracting States:
**AT BE CH DE ES FR GB GR IT LI NL SE**

(71) Applicant: **OMRON TATEISI ELECTRONICS CO.**
**10, Tsuchido-cho Hanazono Ukyo-ku**
**Kyoto-shi Kyoto-fu(JP)**

(72) Inventor: **Ishii, Hiroaki Omron Tateisi**
**Electronics Co.**
**Patent Center 20 Igadera Shimokaiinji**
**Nagaokakyo-shi Kyoto 617(JP)**

(74) Representative: **WILHELMS, KILIAN & PARTNER Patentanwälte**
**Eduard-Schmid-Strasse 2**
**D-8000 München 90(DE)**

(54) **Transaction processing apparatus capable of performing additional processing.**

(57) A memory (6) in an ECR (1) is provided with an area (61) in which normally used programs such as a register processing program is stored, an area (63) in which an arbitrary additional program is loaded, and an execution processing table (62) in which a program identification code for identifying a program for each data number is stored. When a key operation for required setting in the execution processing table (62) is performed, a name of execution processing entered in an area, corresponding to an entered data number, of the execution processing table (62) is set. On the other hand, when a key operation for executing an additional program is performed, the execution processing table (62) is retrieved by the entered data number, so that a processing program corresponding to the data number is loaded in the additional program area (63) from an external storage (7), to be executed.

FIG.1

# TRANSACTION PROCESSING APPARATUS CAPABLE OF PERFORMING ADDITIONAL PROCESSING

## BACKGROUND OF THE INVENTION

### Field of the Invention

The present invention relates generally to a transaction processing apparatus, and more particularly, to a transaction processing apparatus capable of performing arbitrary required processing other than the original transaction processing.

### Description of the Background Art

In a conventional transaction processing apparatus such as an electronic cash register (referred to as ECR hereinafter), a key operation and the contents processable by the key operation have one-to-one correspondence. Accordingly, when it is desired to newly add processing, a new key operation for new processing must be determined and the contents of processing to be added must be added to a program. In addition, when it is desired to achieve partial version up of processing, a program must be altered. Thus, in the above described cases, the key operation and/or many parts of the program must be altered, which is complicated.

## SUMMARY OF THE INVENTION

Accordingly, an object of the present invention is to provide a transaction processing apparatus capable of executing an arbitrary additional program without making alteration on a previously set program.

Another object of the present invention is to provide a transaction processing apparatus capable of performing arbitrary processing without alteration in key operation.

The above described objects of the present invention is achieved by comprising first storing means for previously storing a program required for processing, second storing means for storing a program required for processing other than the program stored in the first storing means, program designating means for designating a program to be executed, selecting means for selecting the program designated by the program designating means from any one of the first storing means and the second storing means, and execution processing means for executing the program selected by the selecting means.

In accordance with another aspect of the present invention, the program designating means comprises entering means for entering a plurality of predetermined key signals. The transaction processing apparatus further comprises storing means for storing a program identification code for identifying a program corresponding to each of the key signals, the selecting means selecting a program based on the program identification code corresponding to the key signal entered from the entering means.

In accordance with still another aspect of the present invention, a program identification code corresponding to a program stored in the storing means can be altered to a program identification code corresponding to another program.

In the transaction processing apparatus according to the present invention, a program for required processing other than a program stored in the first storing means is stored in the second storing means. When a code signal for designating a program to be executed, from the second storing means is entered from the entering means, the program stored in the second storing means is selected, so that data processing is performed based on this program. Thus, the transaction processing apparatus according to the present invention can perform arbitrary required processing such as new processing and processing subjected to version up without making any alteration on the program for transaction processing previously stored in the first storing means.

Furthermore, a program identification code stored in the storing means can be arbitrarily updated. Thus, a program other than the program so far selected can be selected without altering a key signal, so that the contents of processing to be performed can be altered without alteration in key operation.

The foregoing and other objects, features, aspects and advantages of the present invention will become more apparent from the following detailed description of the present invention when taken in conjunction with the accompanying drawings.

## BRIEF DESCRIPTION OF THE DRAWINGS

Fig. 1 is a schematic block diagram showing an electrical structure of an ECR according to an embodiment of the present invention;

Fig. 2 is a diagram showing a key arrangement of a keyboard shown in Fig. 1;

Fig. 3 is an illustration showing an execution processing table of a memory showing in Fig. 1;

Figs. 4A to 4B are diagrams for explaining an example of a key operation; and

Fig. 5 is a diagram for explaining an operation of the ECR according to an embodiment of the present invention.

DESCRIPTION OF THE PREFERRED EMBODIMENTS

In the following, an ECR will be described as an embodiment of the present invention. However, it should be noted that the present invention is not limited to the ECR. The present invention can be applied to any transaction processing apparatus.

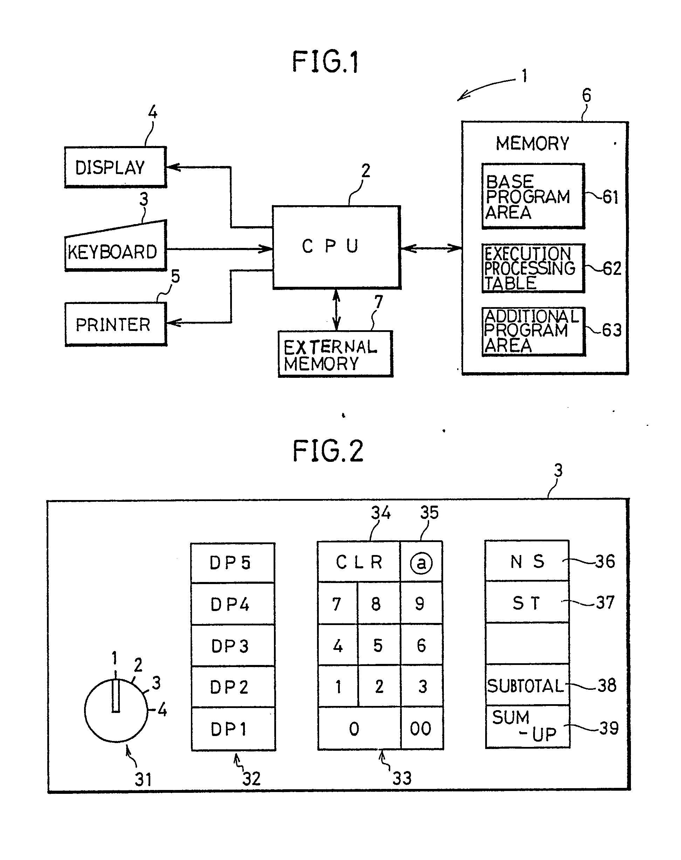

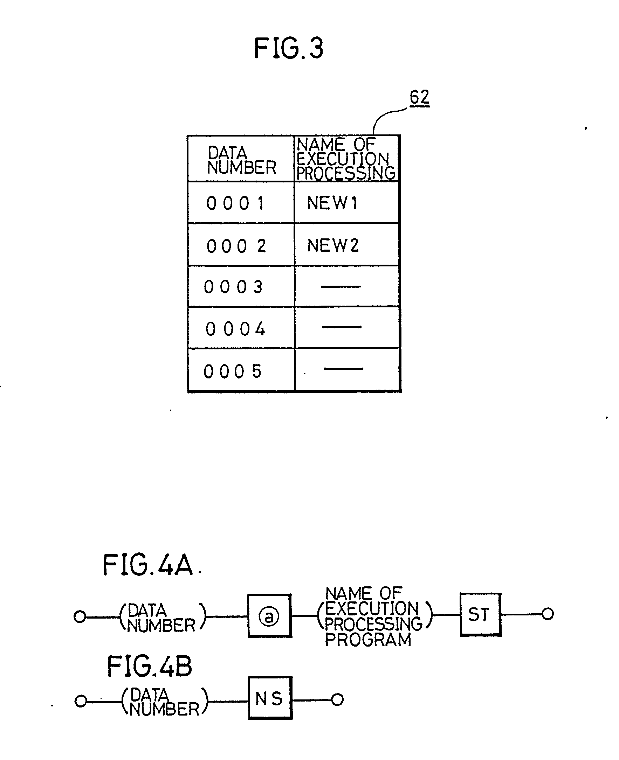

Fig. 1 is a schematic block diagram showing an electrical structure of an ECR according to an embodiment of the present invention, Fig. 2 is a diagram showing a key arrangement of the keyboard shown in Fig. 1, and Fig. 3 is an illustration showing an execution processing table provided on a memory shown in Fig. 1.

Referring now to Figs. 1 to 3, description is made of a structure of an ECR according to an embodiment of the present invention. An ECR 1 is provided with a CPU 2 for various arithmetic operations and control. A keyboard 3, a display 4, a printer 5, a memory 6 and an external storage 7 are connected to the CPU2.

The memory 6 comprises a base program area 61, an execution processing table 62, and an additional program area 63. The base program area 61 is an area in which normally used programs such as a register processing program executed by the ECR 1 are previously stored. The contents stored in the base program area 61 can not be altered by a user. The additional program area 63 is an area in which arbitrary additional programs such as a new program and a program subjected to version up are loaded. The additional programs are read out from the external storage 7 to be loaded in the additional area 61 every time processing is required. Names of execution processing are stored in the execution processing table 62 corresponding to data numbers, as shown in Fig. 3. In this embodiment, program names area used as the names of execution processing. The above described data numbers are normally fixed although they may be changed. The contents stored in the execution processing table 62 can be set or altered by an operation of the keyboard 3. Thus, a name of execution processing of a program set with respect to a data number can be altered to a name of execution processing of another program.

The keyboard 3 is provided with a mode selecting switch 31, a department key 32, a ten-key 33, a clear key 34, an @ key 35, an NS key 36, an ST key 37, a subtotal key 38 and a sum-up key 39, as shown in Fig. 2. The mode selecting switch 31 is used for selecting a setting mode, a register mode, an examination mode, an adjustment mode and an OFF state. The setting mode is used for, for example, required setting in the execution processing table 62. The register mode is used for performing sales processing. The examination mode is used for examining the contents of the sales processing. The adjustment mode is used for printing out the contents of the sales processing and then, clearing the contents of the sales processing from the memory 6. The department key 32 is used for entering a department code indicating a department in which a commodity is registered. The ten-key 33, the @ key 35 and the ST key 37 are operated for setting a data number and a code indicating a name of execution processing in the execution processing table 62 in the setting mode. In addition, the ten-key 33 is operated for entering the proceeds of the sales or the like in the register mode. The clear key 34 is operated in correcting a code and data entered from the ten-key 33. The NS key 36 is operated in executing a required additional program. The subtotal key 38 and the sum-up key 39 are operated in calculating the total proceeds of the sales, the change or the like in the sales processing.

Figs 4A and 4B are diagrams for explaining an example of a key operation, where Fig. 4A shows a key operation in required setting in the execution processing table, and Fig. 4B shows a key operation in executing an arbitrary additional program.

As shown in Fig. 4A, when a name of execution processing is set in the execution processing table 62, the ten-key 33 is first operated to enter a suitable data number and then, the @ key 35 is depressed. Subsequently, a code indicating the name of execution processing is entered from the ten-key 33 and then, the ST key 37 is depressed. As shown in Fig. 4B, when an additional program is executed, a data number corresponding to a name of the additional program is entered from the ten-key 33 and then, the NS key 36 is depressed.

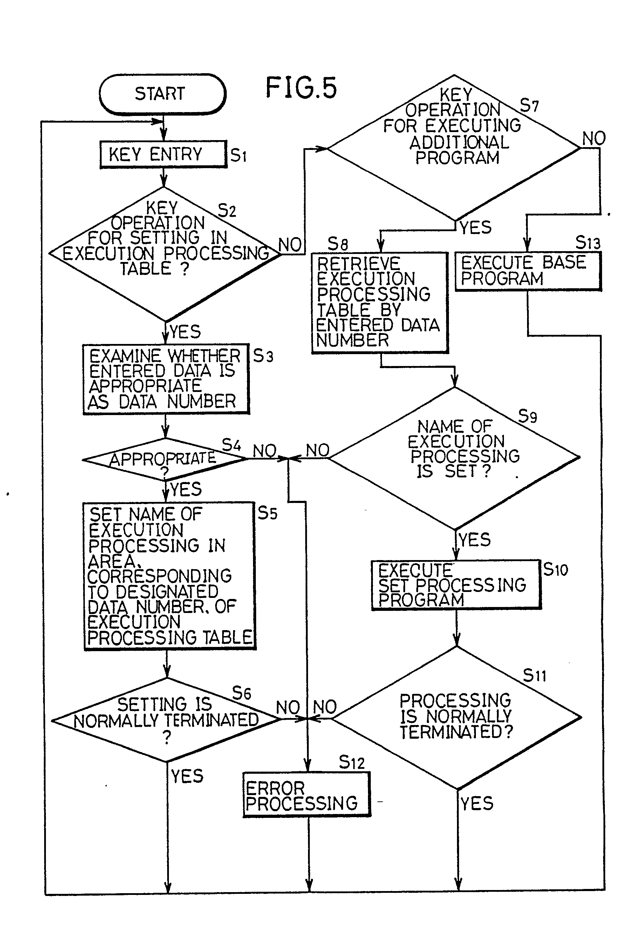

Fig. 5 is a flow chart for explaining an operation of the ECR according to an embodiment of the present invention. Referring now to Figs. 1 to 5, description is made of the operation of the ECR according to an embodiment of the present invention.

When key entry is provided from the keyboard 3 in the step S1 (referred to as S1 in the drawing), it is determined in the step S2 whether or not a key operation for required setting in the execution processing table 62 shown in Fig. 4A is performed. If the key operation for setting is not performed, it is determined in the step S7 whether or not a key operation for executing the additional program shown in Fig. 4B is performed. When the key operation for required setting in the execution processing table 62 is performed, it is examined in the steps S3 and S4 whether or not numeric data entered from the ten-key 33 is appropriate as a data number. In the present embodiment, it is determined that the numeric data is appropriate as a data numbers when it is any one of "0001" to "0005". If the numeric data is not appropriate as the number, error processing is performed in the step S12. Contrary to this, if the numeric data is appropriate, a name of execution processing is set in an area, corresponding to the designated data number, of the execution processing table 62 in the step S5. Subsequently, it is determined in the step S6 whether or not setting in the execution processing table 62 is normally terminated. If abnormality is recognized, error processing is performed in the step S12. Contrary to this, if the setting is normally terminated, the program is returned to an initial state (in the step S1). Thus, in the present embodiment, a key operation for performing required processing can be freely set to be performed by a user.

On the other hand, when the key operation for executing the additional program, the execution processing table 62 is retrieved by a data number entered from the ten-key 33 in the step S8, and it is determined in the step S9 whether or not a name of data processing corresponding to the data number is set in the corresponding table. If a name of execution processing is not set in an area, corresponding to the data number, of the execution processing table 62, error processing is performed in the step S12. Contrary to this, if the name of execution processing is set, the corresponding processing program is loaded in the additional program area 63 from the external storage 7 to be executed in the step S10. Subsequently, it is determined in the step S11 whether or not processing is normally terminated. If abnormality is recognized, error processing is performed in the step S12. Contrary to this, if the processing is normally terminated, the program is returned to the initial state.

If a key operation is performed which does not correspond to any one of the key operations shown in Figs. 4A and 4B, a program for transaction processing stored in the base program area 61 is executed in the step S13. Transaction processing includes a variety of processing such as register processing and adjustment processing. Processing to be executed is selected by selecting modes using the mode selecting switch 31.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A transaction processing apparatus, comprising:
first storing means (61) for storing a program required for predetermined transaction processing, second storing means (63, 7) for storing a program for required processing other than the program stored in said first storing means (61), program designating means (3) for designating a program to be executed, selecting means (2) for selecting the program designated by said program designating means (3) from any one of said first storing means (61) and said second storing means (63, 7), and execution processing means (2) for executing the program selected by said selecting means (2).

2. The transaction processing apparatus according to claim 1, wherein said program designating means (3) comprises entering means (3) for entering a plurality of predetermined key signals, and which further comprises storing means (62) for storing a program identification code for identifying a program corresponding to each of the key signals, said selecting means (2) selecting a program based on the program identification code corresponding to the key signal entered from said entering means (3).

3. The transaction processing apparatus according to claim 2, which further comprises updating means (2) for altering a program identification code corresponding to a key signal, stored in said storing means (62) to a program identification code corresponding to another program.

4. The transaction processing apparatus according to claim 1, wherein said first storing means (61) can fixedly store the contents to be stored therein, and said second storing means (63) can update the contents stored therein.

## FIG.1

## FIG.2

# FIG.3

62

| DATA NUMBER | NAME OF EXECUTION PROCESSING |
|---|---|
| 0 0 0 1 | NEW1 |
| 0 0 0 2 | NEW2 |
| 0 0 0 3 | ——— |
| 0 0 0 4 | ——— |
| 0 0 0 5 | ——— |

## FIG.4A.

○——( DATA NUMBER )——[ @ ]——( NAME OF EXECUTION PROCESSING ) PROGRAM——[ ST ]——○

## FIG.4B

○——( DATA NUMBER )——[ N S ]——○

# FIG.5

START

KEY ENTRY S1

KEY OPERATION FOR SETTING IN EXECUTION PROCESSING TABLE ? S2 — NO

YES

EXAMINE WHETHER ENTERED DATA IS APPROPRIATE AS DATA NUMBER S3

APPROPRIATE ? S4 — NO

YES

SET NAME OF EXECUTION PROCESSING IN AREA, CORRESPONDING TO DESIGNATED DATA NUMBER, OF EXECUTION PROCESSING TABLE S5

SETTING IS NORMALLY TERMINATED ? S6 — NO

YES

KEY OPERATION FOR EXECUTING ADDITIONAL PROGRAM S7 — NO

YES

RETRIEVE EXECUTION PROCESSING TABLE BY ENTERED DATA NUMBER S8

EXECUTE BASE PROGRAM S13

NAME OF EXECUTION PROCESSING IS SET ? S9 — NO

YES

EXECUTE SET PROCESSING PROGRAM S10

PROCESSING IS NORMALLY TERMINATED? S11

NO

ERROR PROCESSING S12

YES